(19) Europäisches Patentamt
European Patent Office
Office européen des brevets

(11) Veröffentlichungsnummer: **0 282 019**
**A2**

(12) # EUROPÄISCHE PATENTANMELDUNG

(21) Anmeldenummer: **88103683.4**

(51) Int. Cl.$^4$: **C08F 20/18**, G02B 1/04

(22) Anmeldetag: **09.03.88**

(30) Priorität: **12.03.87 DE 3707923**

(43) Veröffentlichungstag der Anmeldung:
**14.09.88 Patentblatt 88/37**

(84) Benannte Vertragsstaaten:
**AT BE CH DE FR GB IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Wieners, Gerhard, Dr.**
**Unterweg 17**
**D-6000 Frankfurt am Main(DE)**
Erfinder: **Heumüller, Rudolf, Dr.**
**Sodener Weg 1**
**D-6232 Bad Soden am Taunus(DE)**
Erfinder: **Coutandin, Jochen, Dr.**
**Friedenstrasse 3**
**D-6551 Bretzenheim(DE)**
Erfinder: **Groh, Werner, Dr.**
**Geisenheimer Strasse 93**
**D-6000 Frankfurt am Main 71(DE)**
Erfinder: **Herbrechtsmeier, Peter, Dr.**
**Friedrich-Stolze-Strasse 10**
**D-6240 Königstein/Taunus(DE)**

(54) **Transparente thermoplastische Formmasse.**

(57) Eine transparente thermoplastische Formmasse, welche sich im wesentlichen von einem Ester einer (Meth)-Acrylsäure mit einem cyclischen Alkohol ableitet, läßt sich in einfacher und wirtschaftlicher Weise darstellen. In dieser Formmasse können Säure-und Alkoholrest deuteriert und/oder fluoriert sein. Besonders bevorzugt Alkoholkomponete ist 1,4,5,6,7,7-Hexachlorbicyclo-[2.2.1]-hept-5-en-2-ol. Die Formmasse läßt sich zu Gegenständen mit hoher Transparenz und Wärmeformbeständigkeit verarbeiten.

EP 0 282 019 A2

Xerox Copy Centre

## Transparente thermoplastische Formmasse

Die Erfindung bezieht sich auf eine transparente, thermoplastische Formmasse, welche sich für die Herstellung von Polymer-Gläsern, Artikeln der optischen Industrie und Lichtwellenleitern für die Übermittlung von Lichtsignalen eignet, und auf ein Verfahren zu ihrer Herstellung. Die Formmasse besitzt eine hohe Wärmestandfestigkeit.

Lichtwellenleiter können aus einem Kern und einem Mantel bestehen, wobei das Kernmaterial immer einen höheren Brechungsindex aufweist als das Mantelmaterial. Kern-und Mantelmaterial eines solchen Lichtwellenleiters sollen so wenig Licht wie möglich absorbieren.

Die bisher für Lichtwellenleiter am häufigsten eingesetzten polymeren Materialien sind Homo-und Copolymere des Methylmethacrylats. Während für den Kern auch halogenhaltige Polymere eingesetzt wurden, wurden für den Mantel bislang ausschließlich fluorhaltige Polymere verwendet, weil sie einen niedrigeren Brechungsindex aufweisen. Zur Verminderung der Lichtabsorption ist auch schon vorgeschlagen worden, die Wasserstoffatome in den Monomeren und Polymeren durch Deuterium zu ersetzen.

Bekannt sind Copolymere von Methylmethacrylat mit einer Verbindung der Formel $CH_2=CR\text{-}(CO\text{-}O)_n\text{-}ArBr_m$ ($R=H$, $CH_3$; $n=$ Null, 1, $m$ = 1 bis 5) (vgl. DE-OS 2 202 791). Namentlich genannt sind Acrylsäureester und Methacrylsäureester von Mono-, Di-, Tri-, Tetra-und Pentabromphenol.

Ferner ist eine Formmasse bekannt, welche aus einem polymeren $\alpha$-Fluoracrylsäureester besteht, der sowohl am $\beta$-Kohlenstoffatom der Vinylgruppe als auch in der Alkoholkomponente Deuteriumatome enthalten kann (Europäische Anmeldungsveröffentlichung 0 128 517). Diese Polymeren dienen als Kernmaterial für optische Fasern; sie besitzen ein Molekulargewicht von 200 000 bis 5 000 000 (Gelpermeation), einen Brechungsindex von 1,45 bis 1,60 und eine Erweichungstemperatur von 100 bis 200 °C. Als Mantelmaterial der optischen Fasern werden Polymere verwendet, die einen niedrigeren Brechungsindex aufweisen; hierfür eignen sich u.a. Polymere von $\alpha$-Fluoracrylsäureestern, deren Alkoholkomponente Fluoratome enthalt, z.B. Trifluorethyl-$\alpha$-fluoracrylat und Hexafluorisobutyl-$\alpha$-fluoracrylat.

Herstellung und Eigenschaften der vorgenannten Poly(fluoralkyl-$\alpha$-fluoracrylate) sind ebenfalls bekannt (Europäische Anmeldungsveröffentlichung 0 128 516). Die Polymeren werden erhalten durch radikalisch initiierte Polymerisation der Monomeren in Masse, Lösung oder Suspension in Gegenwart eines Kettenübertragungsmittels bei einer Temperatur von 0 bis 100 °C. Die Polymeren besitzen eine Molmasse von 200 000 bis 5 000 000 (Gelpermeation), einen Brechungsindex von 1,36 bis 1,44 und eine Erweichungstemperatur von 80 bis 140 °C.

Weiterhin ist ein Lichtwellenleiter beschrieben worden, dessen Kernmaterial durch Blockpolymerisation von u.a. halogenierten Arylmethacrylaten, beispielsweise Pentafluorphenyl-methacrylat, hergestellt wird (vgl. JP-OS 60-242404).

Ferner wurden polyhalogenierte Aryl(fluor/meth) acrylesterhaltige Polymere als Materialien für polymere Lichtwellenleiter vorgeschlagen. Schließlich wurden Polymere bekannt, die durch Polymerisation zweier Allylalkoholgruppen entstanden, die mit den Carbonsäuregruppen der 1,4,5,6,7,7-Hexachlorbicyclohept-5-en-2,3-dicarbonsäure verestert sind (vgl. JP-OS 61-51901). Solche Polymere sind jedoch thermoplastisch nicht verarbeitbar, da sie während der Polymerisation vernetzen.

Schon seit längerem sind auch Polymere bekannt, die die 1,4,5,6,7,7-Hexachlor-[2.2.1]-bicyclohept-5-en-2-yl-Gruppe im Alkoholteil von Acrylsäure-und Methacrylsäureestern enthalten (vgl. US-PS 3,022,277). Über die optischen Eigenschaften, die Wärmestandfestigkeit und die Verarbeitungseigenschaften dieser Polymeren ist jedoch nichts bekannt, ebensowenig über die Eigenschaften von Copolymeren mit anderen Acrylsäure-und Methacrylsäureestern.

Die Aufgabe war die Bereitstellung eines Polymers, welches sich in einfacher und wirtschaftlicher Weise herstellen und zu Gegenständen mit hoher Transparenz und Wärmeformbeständigkeit verarbeiten läßt.

Es wurde gefunden, daß eine transparente thermoplastische Formmasse, welche sich im wesentlichen ableitet von einem Ester einer (Meth)Acrylsäure mit einem bicyclischen Alkohol, wobei Säure-und Alkoholrest deuteriert und/oder halogeniert sein können, die Aufgabe zu lösen vermag.

Somit betrifft die Erfindung eine transparente thermoplastische Formmasse, bestehend aus 10 bis 100 Gew.-% an Einheiten, die sich von einem Ester der Formel (I) ableiten

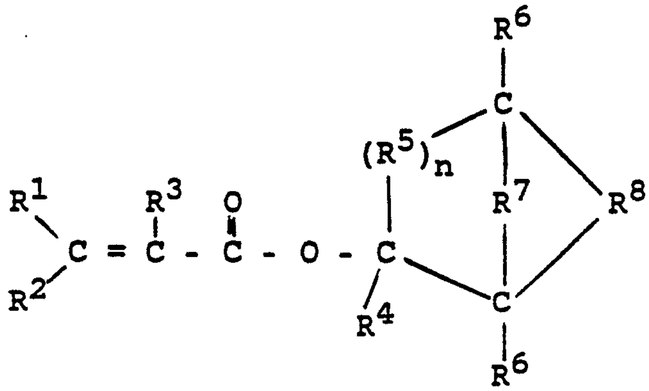

(I),

worin

$R^1$ ein Wasserstoff-, Deuterium-oder Fluoratom,

$R^2$ ein Wasserstoff-, Deuterium-oder Fluoratom,

$R^3$ ein Wasserstoff-, Deuterium-, Fluor-, Chlor-oder Bromatom, eine Cyangruppe oder Methylgruppe deren Wasserstoffatome ganz oder teilweise durch Deuterium-, Fluor-oder Chloratome ersetzt sein können,

$R^4$ ein Wasserstoff-oder Deuteriumatom oder eine $C_1$-bis $C_5$-Alkylgruppe, deren Wasserstoffatome ganz oder teilweise durch Deuterium-oder Fluoratome ersetzt sein können,

$R^5$ eine $-CHR^9$-oder eine $-CDR^9$-Gruppe, in der $R^9$ ein Wasserstoff-Deuterium-, Fluor-, Chlor-oder Bromatom oder eine $C_1$-bis $C_5$-Alkylgruppe ist, in welcher die Wasserstoffatome ganz oder teilweise durch Deuterium-oder Fluoratome ersetzt sein können,

$R^6$ ein Fluor-, Chlor-oder Bromatom oder eine Trifluormethylgruppe,

$R^7$ eine $-CH_2$-Gruppe, in der die Wasserstoffatome ganz oder teilweise durch Deuterium-, Fluor-, Chlor-, oder Bromatome, durch zwei $CH_3O$-Gruppen oder eine 1′,2′-Ethandiyldioxy-Gruppe ersetzt sein können, eine Carbonylgruppe oder eine Ethylengruppe, in der die Wasserstoffatome ganz oder teilweise durch Deuterium-, Chlor-oder Bromatome oder durch eine Oxo-(O = )-Gruppe ersetzt sein können,

$R^8$ eine $-CR^{10} = CR^{10}$-Gruppe, in der $R^{10}$ ein Fluor-, Chlor-oder Bromatom oder ein Trifluormethylgruppe ist, oder eine $-C(R^{11})_2-C(R^{11})_2$-Gruppe, in der $R^{11}$ ein Fluoratom oder eine Trifluormethylgruppe ist, bedeuten, und

n null oder 1 ist, wobei n nicht null ist, wenn $R^7$ eine $-CH_2$-oder eine Carbonylgruppe bedeutet, und

90 bis 0 Gew.-% an Einheiten, die sich von anderen copolymerisierbaren Vinylverbindungen ableiten.

Weiterhin betrifft die Erfindung auch das Verfahren zur Herstellung dieser Formmasse und die aus der Formmasse hergestellten transparenten optischen Gegenstände.

In Formel (I) ist

$R^1$ vorzugsweise ein Wasserstoff-, Deuterium-oder Fluoratom, insbesondere ein Wasserstoff, oder Deuteriumatom,

$R^2$ vorzugsweise ein Wasserstoff-, Deuterium-oder Fluoratom, insbesondere ein Wasserstoff-oder Deuteriumatom,

$R^3$ vorzugsweise ein Wasserstoff-, Deuterium-, oder Fluoratom oder eine Methylgruppe, deren Wasserstoffatome ganz oder teilweise durch Deuteriumatome ersetzt sein können, insbesondere ein Deuterium-oder Fluoratom oder eine Trideuteromethylgruppe,

$R^4$ vorzugsweise ein Wasserstoff-oder ein Deuteriumatom,

$R^5$ vorzugsweise eine Methylen-, Deuteromethylen-oder Chlormethylen-, insbesondere eine Methylen-oder Deuteromethylengruppe,

$R^6$ vorzugsweise ein Chlor-oder Bromatom oder eine Trifluormethylgruppe, insbesondere ein Chlor-oder Bromatom

$R^7$ vorzugsweise eine Methylengruppe, in der die Wasserstoffatome durch Deuterium-, Chlor-, oder Bromatome oder durch zwei Methoxygruppen ersetzt sein können, eine Carbonylgruppe oder eine Ethylengruppe, in der die Wasserstoffatome durch Chloratome oder durch eine Oxogruppe ersetzt sein können, insbesondere eine $-CH_2$-, $-CD_2$-, $-CCl_2$-, $-CBr_2$-, $-CHCl$-, $-C(=O)$-, $-C(=O)-CCl_2$-oder eine $-CH_2-CH_2$-Gruppe.

$R^8$ vorzugsweise eine $-CR^{10} = CR^{10}$-Gruppe, in der $R^{10}$ ein Chlor oder Bromatom oder ein Trifluormethylgruppe, insbesondere ein Chlor-oder Bromatom bedeuten kann, oder eine $-C(R^{11})_2-C(R^{11})_2$-Gruppe, in der $R^{11}$ ein Fluoratom oder eine Trifluormethylgruppe bedeuten kann,

n vorzugsweise 1.

Die Säurekomponente der erfindungsgemäß verwendeten Ester ist somit vorzugsweise Acrylsäure,

Methacrylsäure, α-Fluoracrylsäure, α,β-Difluoracrylsäure oder die entsprechenden ganz oder teilsweise deuterierten Verbindungen, insbesondere die Perdeuteromethacrylsäure, die Perdeuteroacrylsäure, die α-Fluoracrylsäure oder die Perdeutero-α-fluoracrylsäure; die Alkoholkomponente ist vorzugsweise 1,3,4,5,6,7,7-Heptachlorbicyclo-[2.2.1]-hept-5-en-2-ol, 1,4,5,6,7,7-Hexachlor-oder -Hexabrombicyclo-[2.2.1]-hept-5-en-2-ol, 1,4,5,6,7-Pentachlorbicyclo[2.2.1]-hept-5-en-ol, 1,4,5,6-Tetrachlorbicyclo-[2.2.1]-hept-5-en-2-ol, 1,2,3,4-Tetrachlorbicyclo-[2.2.1]-hept-2-en-7-ol, 1,4,5,6-Tetrakis(trifluormethyl)-7-oxo-oder -7-bis-(methoxy)bicyclo-[2.2.1]-hept-5-en-2-ol, 1,2,3,4-Tetrakis(trifluormethyl)bicyclo-[2.2.1]-hept-2-en-7-ol, 1,2,3,4-Tetrabrom-5,6-dichlorbicyclo-[2.2.1]-hept-2-en-7-ol, 1,2,3,4-Tetrachlor-5,6-dibrombicyclo-[2.2.1]-hept-2-en-7-ol, 5,5,6,6-Tetrakis(trifluormethyl)bicyclo-[2.2.1]-heptan-2-ol, 5,5,6,6-Tetrafluorbicyclo-[2.2.1]-heptan-2-ol, 1,4,5,5(oder 6,6),7,8-hexachlor-6(oder 5)-oxobicyclo-[2.2.1]-oct-7-en-2-ol oder 1,4,5,5,6,6,7,8-Octachlorbicyclo-[2.2.1]-oct-7-en-2-ol, insbesondere 1,4,5,6,7,7-Hexachlor-oder -Hexabrombicyclo-[2.2.1]-hept-5-en-2-ol, 1,4,5,6,7-Pentachlorbicyclo-[2.2.1]-hept-5-en-2-ol, 1,4,5,6-Tetrachlorbicyclo-[2.2.1]-hept-5-en-2-ol, 5,5,6,6-Tetrakis(trifluormethyl)bicyclo-[2.2.1]-heptan-2-ol, 5,5,6,6-Tetrafluorbicyclo-[2.2.1]-heptan-2-ol, 1,4,5,6(oder 6,6),7,8-hexachlor-6(oder 5)-oxobicyclo-[2.2.1]-oct-7-en-2-ol.

Erfindungsgemäß werden vorzugsweise diejenigen Ester verwendet, in deren Alkohol-und deren Säurekomponente die Wasserstoffatome möglichst vollständig durch Deuterium-, Fluor-, Chlor-und Bromatome oder durch Trifluormethylgruppen ersetzt wurden, insbesondere Ester der Perdeuteromethacrylsäure, Perdeuteroacrylsäure, α-Fluoracrylsäure oder Perdeutero-α-fluoracrylsäure mit 1,4,5,6,7,7-Hexachlor-oder -Hexabrombicyclo-[2.2.1]-hept-5-en-2-ol-2,2,3-$d_3$, 1,4,5,6,7-Pentachlorbicyclo-[2.2.1]-hept-5-en-2-ol-2,2,3-$d_3$, 1,4,5,6-Tetrachlorbicyclo-[2.2.1]-hept-5-en-2-ol-2,2,3-$d_3$, 5,5,6,6,-Tetrakis(trifluormethyl)bicyclo-[2.2.1]-heptan-2-ol-1,2,3,4,7,7-$d_6$, 5,5,6,6-Tetrafluorbicyclo-[2.2.1]-heptan-2-ol-1,2,3,4,7,7-$d_6$, 1,4,5,5(oder 6,6),7,8-hexachlor-6(oder 5)-oxobicyclo-[2.2.1]-oct-7-en-2-ol-2,2,3-$d_3$.

Die erfindungsgemäße Formmasse besteht zu 10 bis 100, vorzugsweise 40 bis 100, insbesondere 50 bis 80 Gew.-% aus Einheiten, welche sich von einem Ester der Formel (I) ableiten, und 90 bis 0, vorzugsweise 60 bis 0, insbesondere 50 bis 20 Gew.-% aus Einheiten, welche sich von anderen copolymerisierbaren Vinylverbindungen ableiten. Geeignete Verbindungen sind $C_1$-bis $C_6$-Alkylester der Acrylsäure, $C_1$-bis $C_6$-Alkylester der Methacrylsäure, $C_1$-bis $C_6$-Alkylester der α-Fluoracrylsäure, Styrol oder substituiertes Styrol. Bevorzugt verwendet werden die Ester der Acrylsäure, Methacrylsäure und α-Fluoracrylsäure und deren deuterierte Derivate. Insbesondere werden Acrylsäuremethylester, Methacrylsäuremethylester und α-Fluoracrylsäuremethylester eingesetzt, wobei die entsprechenden deuterierten Verbindungen besonders bevorzugt werden.

Die erfindungsgemäße Formmasse wird durch radikalische Blockpolymerisation oder Polymerisation in Suspension, Emulsion oder in Lösung, insbesondere durch Blockpolymerisation einer Verbindung der Formel (I) und gegebenenfalls einer anderen copolymerisierbaren Vinylverbindung hergestellt.

Geeignete radikalisch wirksame Initiatoren sind Azoverbindungen wie Azo-bis-isobutyronitril, Azo-bis-(cyclohexylcarbonitril), Azo-bis-(tert.-octan), 2-Phenylazo-2,4-dimethyl-4-methoxyvaleronitril und organische Peroxide wie tert.-Butylperoxid, tert.-Butylperoctoat, tert.-Butylperoxyisopropylcarbonat, tert.-Butylhydroperoxid und tert.-Butylperoxyisobutyrat. Die Menge des Initiators liegt im Bereich von 0,001 bis 3, vorzugsweise 0,035 bis 0,3 Mol pro 100 Mol des oder der Monomeren. Vorteilhaft ist die Durchführung der Polymerisation in Gegenwart eines Kettenübertragungsmittels (Reglers). Hierfür eignen sich insbesondere Merkaptane wie Butylmerkaptan, tert.-Butylmerkaptan, Propylmerkaptan, Phenylmerkaptan, tert.-Hexylmerkaptan und Butylen-1,4-dithiol, sowie Ester der Merkaptoessigsäure, z.B. Ethylmerkaptoacetat und Ethylenglykolbis(merkaptoacetat). Die Polymerisationstemperatur beträgt 60 bis 180 °C, vorzugsweise 80 bis 160 °C, besonders bevorzugt 100 bis 160 °C.

Es ist empfehlenswert, das Reaktionsgemisch vor Beginn der Polymerisation zu entgasen. Hierzu wird das Reaktionsgemisch aus Monomeren, Initiator und gegebenenfalls Regler in einem Reaktor zunächst auf eine Temperatur von mindestens -80 °C abgekühlt, dann wird der Reaktor evakuiert und in verschlossenem Zustand auf eine Temperatur von 0 bis 25 °C erwärmt; dieser Vorgang kann mehrere Male wiederholt werden.

Die erfindungsgemäße Formmasse entsteht in Form einer glasklaren Masse, die thermoplastisch verformbar ist. Sie ist daher von allem als Material zur Herstellung von transparenten Gegenständen geeignet, z.B. Resistmaterialien, Linsen, Lichtwellenleitern und, allein oder gemischt mit einem anderen Polymeren, welches einen anderen Brechungsindex aufweist, als Material für optische Datenspeichermedien. Die spektrale Durchlässigkeit der Formmasse ist besonders hoch im Wellenlängenbereich von 600 bis 1300 nm. Die Formmasse zeigt die nachstehenden charakteristischen Eigenschaften:

Mittlere Molmasse 8 000 bis 5 000 000, vorzugsweise 50 000 bis 200 000 (gemessen nach der Lichtstreuungsmethode); Glasumwandlungstemperatur 95 bis 250 °C, vorzugsweise 120 bis 200 °C, besonders bevorzugt 150 bis 180 °C.

Zersetzungstemperatur mindestens 230 °C, vorzugsweise 250 bis 300 °C.

Die aus der erfindungsgemäßen Formmasse gefertigten Gegenstände weisen eine ausgezeichnete Wärmeformbeständigkeit auf und sind schwer entflammbar.

Die folgenden Beispiele dienen zur näheren Erläuterung der Erfindung. Prozentangaben beziehen sich jeweils auf das Gewicht.

**Beispiel 1**

1) 1,2,3,4,7,7-Hexachlorbicyclo-[2.2.1]-hept-2-en-5-yl-acetat

In einem 250 ml-Dreihalskolben mit Magnetrührer, Thermometer und Rückflußkühler wurden 100 g (0,366 Mol) Hexachlorcyclopentadien und 37 g (0,43 Mol) Vinylacetat unter Rückfluß erhitzt. Dabei betrug die Temperatur des Reaktionsgemisches anfangs 87 °C und gegen Ende, nach 40 Stunden, 139 °C. Das Gemisch wurde fraktioniert destilliert, wobei als Hauptfraktion bei 105-112 °C (0,05 mbar) 95 g des Esters erhalten wurden (72 % d.Th.).

2) 1,2,3,4,7,7,-Hexachlorbicyclo-[2.2.1]-hept-2-en-5-ol

In einem 4 l-Dreihalskolben mit Magnetrührer, Thermometer und Rückflußkühler wurden 880 g (2,45 Mol) Verbindung 1 mit 1760 ml Methanol und 17,6 ml konz. Salzsäure versetzt und 4 Stunden lang unter Rückfluß erhitzt. Dann wurde das Lösungsmittel abgedampft und der feste Rückstand in n-Heptan umkristallisiert, wobei 704 g des Alkohols erhalten wurden (90 % d.Th.)

3) 1,2,3,4,7,7-Hexachlorbicyclo-[2.2.1]-hept-2-en-5-yl-acrylat (AHC)

In einem 500 ml-Dreihalskolben mit Magnetrührer, Thermometer und Rückflußkühler wurden 50 g (0,158 Mol) Verbindung 2 in 150 ml Toluol gelöst und bei 70 °C mit 21,5 g (0,237 Mol) Acrylsäurechlorid versetzt. Das Gemisch wurde anschließend noch 16 Stunden bei dieser Temperatur gerührt. Dann wurde das Lösungsmittel abgedampft und der Rückstand destilliert. Die Fraktion um 118 °C (60,6 g) wurde in Diethylether gelöst und über eine $Al_2O_3$-Säule filtriert. Nach Abdampfen des Diethylethers aus dem Filtrat erhielt man 33,4 g des Acrylsäureesters (57 % d.Th.).

4) 1,2,3,4,7,7-Hexachlorbicyclo-[2.2.1]-hept-2-en-5-yl-methacrylat (MA-HC)

In einem 1 l-Dreihalskolben mit Magnetrührer, Thermometer und Rückflußkühler wurden 200 g (0,63 Mol) Verbindung 2 in 500 ml Toluol gelöst und mit 99,2 g (0,95 Mol) Methacrylsäurechlorid versetzt. Dieses Gemisch wurde dann 30 Stunden unter Rückfluß gerührt. Anschließend wurde das Lösungsmittel abgedampft und der Rückstand, in Diethylether gelöst, über eine $Al_2O_3$-Säule filtriert. Nach Abdampfen des Diethylethers wurden 189,4 g des Methacrylsäureesters erhalten (78 % d.Th.).

**Beispiel 2**

Eine Lösung aus 100 Teilen Acrylsäurehexachlorbicycloheptenylester (AHC), 0,05 Teilen Dicumylperoxid und 0,17 Teilen Butylmerkaptan wurde durch ein Membranfilter (Porenweite 200 nm) in ein Glasgefäß filtriert und sorgfältig entgast. Dazu wurde das Reaktionsgemisch zunächst mit Hilfe von flüssigem Stickstoff eingefroren, das Glasgefäß dann evakuiert (0,001 mbar) und anschließend auf Zimmertemperatur erwärmt. Dieser Vorgang wurde dreimal wiederholt. Das Reaktionsgefäß wurde danach verschlossen und das entgaste Reaktionsgemisch zunächst 5 Stunden lang auf eine Temperatur von 123 °C, dann auf eine Temperatur von 140 °C erwärmt. Nach dem Abkühlen auf Zimmertemperatur wurde eine glasklare Polymermasse erhalten, an der die nachfolgenden Eigenschaften gemessen wurden.

Mittlerer Polymerisationsgrad $P_w$ 2050
Glasumwandlungstemperatur 159 °C

Zersetzungstemperatur 270 °C
Schmelzindex (250 °C; 3,8 kg) 8 g.10 min
Restmonomergehalt 0,5 %
Brechungsindex $n_D^{23}$ 1,54

**Beispiel 3**

Eine Lösung aus 50 Teilen Metacrylsäurehexachlorbicycloheptenylester (MAHC), 0,03 Teilen Azoisobutylronitril und 0.5 Teilen Butylmerkaptan in 50 Teilen Chloroform wurde analog Beispiel 2 filtriert und entgast. Das entgaste Reaktionsgemisch wurde dann 20 Stunden lang auf eine Temperatur von 60 °C erwärmt. Der Ansatz wurde nach Abkühlen auf Zimmertemperatur mit 400 Teilen Aceton versetzt und das erhaltene Gemisch in 6000 Teile Hexan gegossen. Das dabei gefällte Polymere wurde von der Flüssigkeit abgetrennt, nochmals aus Aceton/Hexan umgefällt und 6 Stunden lang bei einer Temperatur von 100 °C im Vakuum getrocknet.
Erhalten wurden 40 g (80 % der Theorie) eines Polymeren, an welchem die folgenden Eigenschaften gemessen wurden:
Mittlerer Polymerisationsgrad $P_w$ 500
Glasumwandlungstemperatur 220 °C
Zersetzungstemperatur 300 °C

**Beispiele 4 bis 6**

Lösungen aus unterschiedlichen Mengen von MAHC und Methylmethacrylat (MMA) mit jeweils 0,1 Azoisobutyronitril und 0,15 g Butylmerkaptan wurden analog Beispiel 2 filtriert und entgast. Die entgasten Reaktionsgemische wurden jeweils 30 Minuten lang auf eine Temperatur von 60 °C erwärmt und nach Abkühlen auf Raumtemperatur mit 300 ml Aceton versetzt. Die jeweils erhaltenen Gemische wurden in 5 l Hexan gegossen, und die gefällten Copolymeren wurden von der Flüssigkeit getrennt und 6 Stunden lang bei einer Temperatur von 70 °C getrocknet.

Die jeweilige Zusammensetzung des Monomergemisches und des Copolymers sowie die Glasumwandlungstemperatur (Tg) des Copolymers sind aus Tabelle 1 ersichtlich.

**Tabelle 1**

| Beispiel | Gewichtsverhältnis MMA : MAHC | | Tg (°C) | $n_D^{23}$ |
|---|---|---|---|---|
| | Monomergemisch | Copolymer | | |
| 4 | 28:72 | 23:77 | 161 | 1,529 |
| 5 | 51:49 | 40:60 | 155 | 1,523 |
| 6 | 70:30 | 59:41 | 147 | 1,513 |

**Beispiel 7**

Eine Mischung aus 50 Teilen MAHC und 50 Teilen MMA, 0,05 Teilen tert.-Butyl-(isopropylperoxycarbonat) und 0,5 Teilen Butandithiol wurde in einem (druckfesten) Reaktionsgefäß mit Rühreinrichtung und Dosiereinrichtung mit Stickstoff gesättigt. Die Reaktionslösung wurde unter Rühren auf 90 °C erwärmt.

An einem Anstieg der aufgenommenen Rührwerksleistung konnte ein leichter Anstieg der Viskosität und damit der Beginn der Reaktion erkannt werden. 15 min nach Polymerisationsbeginn wurde der Mischung eine Probe entnommen und das Konzentrationsverhältnis MMA zu MAHC gaschromatografisch bestimmt.

Entsprechend dem Mehrverbrauch an MAHC wurden kontinuierlich weitere Teile einer Mischung aus 40 Teilen MMA, 60 Teilen MAHC, 0,05 Teilen Butandithiol und 0,4 Teilen tert.-Butyl(isopropylperoxycarbonat) zudosiert und die Dosiergeschwindigkeit entsprechend den Ergebnissen weiterer (gaschromatografischer) Analysen so eingestellt, daß im Reaktionsgefäß ein Verhältnis der Konzentrationen der freien Monomeren von MMA : MAHC von 52:48 (g/g) eingehalten wurde.

Nach Beendigung der Nachdosierung wurde die Reaktionsmischung im Verlauf von 2 Stunden auf 160 °C erhitzt und 2 Stunden bei dieser Temperatur gehalten. Anschließend wurde die Mischung in einen zweistufigen Entgasungsextruder überführt, wo Monomerreste entfernt wurden.

Das Glaspunkt des granulierten Materials lag bei $T_g$ = 157 °C, der mittlere Polymerisationsgrad betrug $P_w$ = 2340.

**Beispiel 8**

Das Material aus Beispiel 2 ließ sich in einem Formwerkzeug bei 250 °C unter Druck zu Linsen und ähnlichen optischen Gegenständen umformen. Nach einem Polieren der Oberfläche einer Linse wurde eine Transmission von 91 % des eingestrahlten Lichts erreicht.

Transmission und Abbildungseigenschaften dieser Linse blieben auch nach 24 stündiger Lagerung bei 100 °C und einer Luftfeuchtigkeit von 100 mbar unverändert.

**Vergleichsbeispiel A**

Eine unter den Bedingungen des Beispiels 8 aus einem Polymerglaskörper aus Polymethylmethacrylat (PMMA) geformte Linse zeigte nach dem Polieren eine Transmission von 89 % und vergleichbar gute Abbildungseigenschaften. Bereits nach 2-stündiger Lagerung bei 120 °C war die Oberfläche der Linse deutliche getrübt und die Form der Linse hatte sich so weitgehend verändert, das keine brauchbare Abbildung mehr zustande kam.

**Beispiel 9**

Die Polymerisation gemäß Beispiel 7 wurde wiederholt und das Polymerisat ohne Granulierung direkt zu einem Lichtwellenleiter verarbeitet. Von der Lichtintensität, die in eine Stirnfläche des Lichtwellenleiters eingestrahlt wurde, konnten nach drei Metern Länge noch 45 %, nach einem Meter noch 70 % gemessen werden.

Nachdem die Faser 7 Tage bei 120 °C und 100 mbar Luftfeuchtigkeit gelagert worden war, konnten nach einem Meter Länge nach wie vor 70 %, nach drei Metern noch 43 % der eingestrahlten Lichtintensität nachgewiesen werden.

**Vergleichsbeispiel B:**

Ein drei Meter langes Stück eines Lichtwellenleiters aus PMMA zeigte zu Beginn des Experiments eine Lichtdurchlässigkeit von 70 %. Bereits nach dreistündiger Lagerung bei 110 °C war die Länge der Faser auf die Hälfte geschrumpft und die Lichtdurchlässigkeit auf 10 % der eingestrahlten Lichtintensität gesunken.

**Ansprüche**

1. Transparente thermoplastische Formmasse, bestehend aus 10 bis 100 Gew.-% an Einheiten, die sich von einem Ester der Formel (I) ableiten

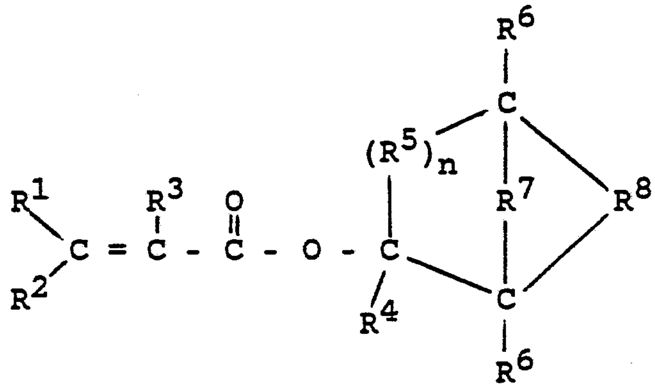

(I),

worin

$R^1$ ein Wasserstoff-, Deuterium-oder Fluoratom,

$R^2$ ein Wasserstoff-, Deuterium-oder Fluoratom,

$R^3$ ein Wasserstoff-, Deuterium-, Fluor-, Chlor-oder Bromatom, eine Cyangruppe oder Methylgruppe deren Wasserstoffatome ganz oder teilweise durch Deuterium-, Fluor-oder Chloratome ersetzt sein können,

$R^4$ ein Wasserstoff-oder Deuteriumatom oder eine $C_1$-bis $C_5$-Alkylgruppe, deren Wasserstoffatome ganz oder teilweise durch Deuterium-oder Fluoratome ersetzt sein können,

$R^5$ eine $-CHR^9$-oder eine $-CDR^9$-Gruppe, in der $R^9$ ein Wasserstoff-Deuterium-, Fluor-, Chlor-oder Bromatom oder eine $C_1$-bis $C_5$-Alkylgruppe ist, in welcher die Wasserstoffatome ganz oder teilweise durch Deuterium-oder Fluoratome ersetzt sein können,

$R^6$ ein Fluor-Chlor-oder Bromatom oder eine Trifluormethylgruppe,

$R^7$ eine $-CH_2$-Gruppe, in der die Wasserstoffatome ganz oder teilweise durch Deuterium-, Fluor-, Chlor-, oder Bromatome, durch zwei $CH_3O$-Gruppen oder eine 1′,2′-Ethandiyldioxy-Gruppe ersetzt sein können, eine Carbonylgruppe oder eine Ethylengruppe, in der die Wasserstoffatome ganz oder teilweise durch Deuterium-, Chlor-oder Bromatome oder durch eine Oxo-(O=)-Gruppe ersetzt sein können,

$R^8$ eine $-CR^{10} = CR^{10}$-Gruppe, in der $R^{10}$ ein Fluor-, Chlor-oder Bromatom oder ein Trifluormethylgruppe ist, oder eine $-C(R^{11})_2-C(R^{11})_2$-Gruppe, in der $R^{11}$ ein Fluoratom oder eine Trifluormethylgruppe ist, bedeuten, und

n null oder 1 ist, wobei n nicht null ist, wenn $R^7$ eine $-CH_2$-oder eine Carbonylgruppe bedeutet, und

90 bis 0 Gew.-% an Einheiten, die sich von anderen copolymerisierbaren Vinylverbindungen ableiten.

2. Formmasse nach Anspruch 1, dadurch gekennzeichnet, daß die Verbindung der Formel (I) ein Ester des 1,4,5,6,7,7-Hexachlor-oder -Hexabrombicyclo-[2.2.1]-hept-5-en-2-ols, 1,4,5,6,7-Pentachlorbicyclo-[2.2.1]-hept-5-en-2-ols, 1,4,5,6-Tetrachlorbicyclo-[2.2.1]-hept-5-en-2-ols, 5,5,6,6-Tetrakis(trifluormethyl)bicyclo-[2.2.1]-heptan-2-ols, 5,5,6,6-Tetrafluorbicyclo-[2.2.1]-heptan-2-ols, 1,4,5,5(oder 6,6),7,8-hexachlor-6(oder 5)-oxobicyclo-[2.2.1]-oct-7-en-2-ols ist.

3. Formmasse nach Anspruch 1, dadurch gekennzeichnet, daß die copolymerisierbaren Vinylverbindungen $C_1$-$C_6$-Alkylester der Acrylsäure, $C_1$-$C_6$-Alkylester der Methacrylsäure, $C_1$-bis $C_6$-Alkylester der α-Fluoracrylsäure, Styrol oder substituiertes Styrol sind.

4. Verfahren zur Herstellung einer transparenten thermoplastischen Formmasse durch radikalische Blockpolymerisation der Monomeren, dadurch gekennzeichnet, daß 10 bis 100 Gew.-% eines Esters der Formel (I)

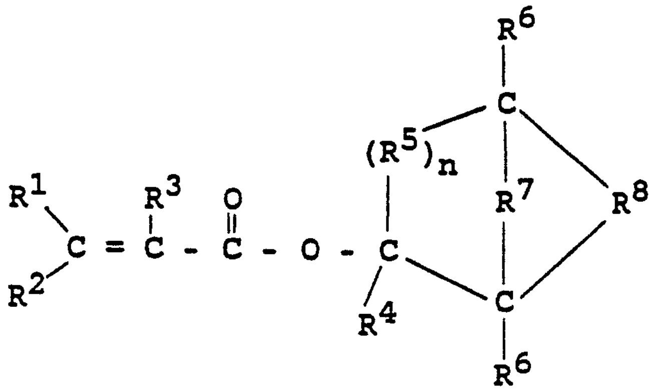

(I),

worin $R^1$, $R^2$, $R^3$, $R^4$, $R^5$, $R^6$, $R^7$, $R^8$, $R^{10}$ und $R^{11}$ die in Anspruch 1 genannten Bedeutungen haben, und 90 bis 0 Gew.-% einer anderen polymerisierbaren Vinylverbindung polymerisiert werden.

5. Verfahren nach Anspruch 4, dadurch gekennzeichnet, daß 40 bis 100 Gew.-% eines Esters des 1,4,5,6,7,7-Hexachlorbicyclo-[2.2.1]-hept-5-en-ol-2 und 60 bis 0 Gew.-% einer anderen polymerisierbaren Vinylverbindung polymerisiert werden.

6. Verwendung der Formmasse gemäß Anspruch 1 zur Herstellung transparenter optischer Gegenstände.

7. Verwendung gemäß Anspruch 6 zur Herstellung optischer Speichermedien.

8. Verwendung gemäß Anspruch 6 zur Herstellung von Lichtwellenleitern.